(19) Europäisches Patentamt
European Patent Office
Office européen des brevets

(11) **EP 3 096 100 B1**

(12) **EUROPÄISCHE PATENTSCHRIFT**

(45) Veröffentlichungstag und Bekanntmachung des Hinweises auf die Patenterteilung:
**27.03.2019 Patentblatt 2019/13**

(51) Int Cl.:
***F27B 17/02*** *(2006.01)* ***A61C 13/20*** *(2006.01)*

(21) Anmeldenummer: **15169054.2**

(22) Anmeldetag: **22.05.2015**

(54) **DENTALPRESSOFEN**

DENTAL PRESS KILN

FOUR DE PRESSÉE DENTAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.11.2016 Patentblatt 2016/47**

(73) Patentinhaber: **Ivoclar Vivadent AG**
**9494 Schaan (LI)**

(72) Erfinder: **Jussel, Rudolf**
**A-6805 Feldkirch-Gisingen (LI)**

(74) Vertreter: **Splanemann**
**Patentanwälte Partnerschaft**
**Rumfordstrasse 7**
**80469 München (DE)**

(56) Entgegenhaltungen:
**EP-A1- 0 438 802     EP-A1- 1 915 973**
**CN-U- 203 908 307     US-B1- 6 303 059**
**US-B2- 9 022 763**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Dentalpressofen, gemäß dem Oberbegriff von Anspruch 1, sowie ein Verfahren zum Betrieb eines Dentalpressofens, gemäß dem Oberbegriff von Anspruch 14.

Für einen erfolgreichen Pressvorgang einer Dentalkeramik ist es wichtig, das Aufheizen mit einem exakt definierten Aufheizprofil vorzunehmen. Ein derartiges Profil mit einer ersten vergleichsweise hohen Erstaufheizrate, an die sich eine geringere Zweitaufheizrate anschließt, lässt sich beispielsweise der DE 10 2008 012 578 B4 entnehmen.

An sich ist eine derartige Aufheizkurve günstig für ein befriedigendes Pressergebnis, denn hierbei wird, bevor das Pressen beginnt, also zu einem unkritischen Zeitpunkt, eine starke Aufheizung vorgenommen, und während des Pressens selbst wird das Material schonend gepresst.

Eine weitere Verbesserung hierzu lässt sich der EP 1 915 972 B2 entnehmen, gemäß welcher ein Integral über eine Temperatur/Zeit-Fläche für die Erfassung der eingeleiten Wärmemenge herangezogen wird.

Während die gemessenen Temperaturen typischerweise die Ofeninnenraumtemperatur betreffen und insofern nicht die echte Temperatur eines Rohlings, ist aus der WO 2014/131588 A1 ein Verfahren bekannt geworden, die Temperatur des Rohlings selbst zu erfassen.

Dokumente EP 0 438 802 A1 und US 9 022 763 B2 offenbaren beide einen Dentalpressofen und ein Verfahren zum Betrieb des Dentalpressofens basierend auf einer Steuervorrichtung für die Steuerung des Pressvorgangs, bei welchem Pressvorgang ein Pressstempel auf einen Rohling wirkt und Druck ausübt, wobei ein Druck-, Weg- und/oder Geschwindigkeitssensor mindestens einen Bewegungsparameter des Pressstempels erfasst und wobei der Pressvorgang durch den Bewegungsparameter des Kolbens gesteuert ist.

Bei längeren Rohlingen besteht aber innerhalb des Rohlings ein gewisser Temperaturgradient, und auch mit der genannten neuen und an sich günstigen, aber auch nicht ganz unaufwändigen Lösung lässt sich typischerweise die Temperatur des Rohling an einer Stelle, jedoch nicht an allen Stellen erfassen.

Ein weiteres Problem besteht darin, dass bei besonders ausgebildeten Temperaturprofilen die Totzeit des Systems Muffel/Rohling die gemessenen Temperaturprofile verzögert. Diese hängt stark von der Masse des Rohlings und der Muffel ab. Besonders voluminöse Muffeln und große Dentalrestaurationsteile wie vierzehngliedrige Brücken müssten daher im Grunde mit noch "schärferen" also längeren und exakten Aufheizprofilen betrieben werden.

Um insofern den erforderlichen Sicherheitsabstand einzuhalten, wird typischerweise nach der Aufheizung eine Haltezeit eingeschoben, die dem Tempereaturausgleich dienen soll und in welchem die heißen Außenbereiche der Muffel ihre Wärme an das Muffelzentrum und damit den Rohling abgeben.

Diese Haltezeit verlängert jedoch je nach Muffelgröße den Presszyklus beträchtlich, was teilweise nicht als akzeptabel angesehen wird. Zudem muss je nach verwendeter Muffelgrösse ein entsprechendes Steuerprogramm mit passenden Temperaturprofilen und Haltezeiten ausgewählt werden. Bei der heutigen Anzahl an Materialien und Programmen für unterschiedliche Muffeln kann diese Auswahl durch den Zahntechniker im Eifer des Gefechtes ab und an auch einmal fehlerhaft sein.

Daher liegt der Erfindung die Aufgabe zugrunde, einen Dentalpressofen gemäß dem Oberbegriff von Anspruch 1 sowie ein Verfahren zum Betrieb eines Dentalpressofen gemäß Oberbegriff von Anspruch 14 zu schaffen, der unabhängig von der Größe der Dentalrestauration beziehungsweise der zugehörigen Muffel einen verkürzten Presszyklus erlaubt.

Diese Aufgabe wird erfindungsgemäß durch Anspruch 1 bzw 14 gelöst. Vorteilhafte Weiterbildungen ergeben sich aus den Unteransprüchen.

Erfindungsgemäß besonders günstig ist es, dass nun mit der Erfindung erstmals die inherenten physikalischen Parameter eines Rohlings als Kriterium eingesetzt werden können. Dies stellt einen signifikanten Fortschritt auch gegenüber Lösungen wie derjenigen gemäß der vorstehend genannten DE 10 2008 015 483 B4 dar - und erst recht gegenüber den typischen und bislang extrem weit verbreiteten Brennöfen und Pressöfen, bei denen lediglich ein Temperatursensor im Ofeninnenraum zum Einsatz gelangt. Bei der demgegenüber noch besseren Lösung gemäß der WO 2014/131588 A1 wird immerhin die Oberfläche des zu erzeugenden Dentalrestaurationsteils geprüft. Jedoch besteht gerade bei größeren Rohlingen ein Temperaturgradient, und auch die Größe des Rohlings ist für die Temperaturdifferenz zwischen Innen und Außen verantwortlich. Ein weiterer Nachteil der vorbekannten Lösung ist, dass zusätzliche und kostspielige Messtechnik am Gerät angebracht werden muss.

Typischerweise besteht in einer Muffel ein Temperaturgradient, der sich mit seinen Isothermen in dreidimensioneler Sicht betrachtet im wesentlichen glockenförmig erstreckt, wobei - bezogen auf den Rohling - unten in der Mitte des Rohlings die geringste und oben/außen an dem Rohling die höchste Temperatur besteht. Erfindungsgemäß werden nun Rohlingparameter an den Seitenflächen des Rohlings als Auslösekriterium herangezogen, in einer überraschend raffinierten Weise, wobei der gesamte Rohling und seine Temperatur ausgewertet wird.

Erfindungsgemäß werden auch nicht ideale Startbedingungen aus vorangegangenen Prozessschritten wie eine korrekte Vorwärmetemperatur oder Vorwärmedauer der Muffel berücksichtigt respektive korrigiert bzw. ausgeglichen.

Der Rohling wird - lange vor dem eigentlichen Pressvorgang - über den Pressstempel - typischerweise über Zwischenschaltung eines Presskolbens, beispielsweise aus $Al_2O_3$, unter Druck gesetzt. Auf seine obere Stirnfläche wirkt nun eine Kraft und ein Druck, der von seiner Unterseite aufgefangen wird, teilweise aber auch zu einer elastischen Verformung des Rohlings - allerdings in ganz geringem Maße - führt. Diese Kraft und die Verformung ist jedenfalls ausreichend, das Spiel zu überbrücken, das für die Einführung des Rohlings in den Presskanal der Muffel reserviert wird.

Die Muffelmasse hat typischerweise einen vergleichsweise geringen Wärmeausdehnungkoeffizienten von beispielsweise 3 x $10^{-6}$/°K, während der Keramikrohling einen deutlich höheren Wärmeausdehnungskoeffizienten von beispielsweise $10^{-5}$/°K aufweist.

Keramikrohlinge haben bis unterhalb des sogenannten Glasübergangsbereichs einen Wärmeausdehnungskoeffizienten von beispielsweise 10 oder 10,5 x $10^{-6}$/°K. Der Wärmeausdehnungskoeffizient steigt zwar dann deutlich an, wenn der sogenannte Phasenübergang zweiter Ordnung überschritten ist, beispielsweise auf 14,5 x $10^{-6}$/°K. Aufgrund der Erweichung des Rohlings ändert sich jedoch insbesondere auch die Form des Rohlings; soweit der nicht an der Wand des Presskanals anliegt, erfolgt nun eine Anlage. Insbesondere beginnt der Rohling aber auch in die Anstiftkanäle für die Dentalrestaurations-Hohlräume einzutreten, nachdem er nunmehr viskos geworden ist. Dies stellt eine erhebliche Überkompensation des zunehmenden Wärmeausdehnungskoeffizienten dar.

In vorteilhafter Ausgestaltung ist es vorgesehen, dass die Mikroimpulse eine Bewegungszeit und eine Bewegungsstrecke aufweisen, die um mehr als eine Größenordnung, insbesondere mehr als zwei Größenordnungen geringer als die Gesamtbewegungsstrecke des Rohlings und die Gesamtrestzeit ist, wobei die Länge der Mikroimpulse insbesondere zwischen einer Millisekunde und 500 Milisekunden beträgt.

Die Mikroimpulse geben eine geringe und kurzzeitige Bewegung zwischen dem oberen oder stempelnahen Ende des Rohlings und der umgebenden Muffel wieder. Besonders günstig ist es, dass dadurch der zeitlichen Verlauf der Wärmeausdehnung in Folge der Erwärmung des eingebrachten Systems bestehend aus Muffel, zwischengeschaltetem Presskolben und insbesondere dem Rohling erfaßt werden kann.

In weiterer vorteilhafter Ausgestaltung ist es vorgesehen, dass die Steuervorrichtung den Pressbeginn unabhängig von der von dem Temperatursensor gemessenen Temperatur in Abhängigkeit der Beendigung der Mikroimpulse festlegt.

In weiterer vorteilhafter Ausgestaltung ist es vorgesehen, dass die Steuervorrichtung den Pressbeginn basierend auf einer Erhöhung der gemessenen Zeitdauer zwischen zwei aufeinanderfolgenden Mikroimpulsen über einen vorgegebenen Schwellwert startet.

In weiterer vorteilhafter Ausgestaltung ist es vorgesehen, dass die Steuervorrichtung bei Zunahme der Zeitdauer zwischen zwei aufeinanderfolgenden Mikroimpulsen über einen vorgegebenen, insbesondere zweiten Schwellwert, die Heizleistung auf einen Nennwert absenkt.

Erfindungsgemäß wird das Zeitprofil der Mikroimpulse ausgewertet und entweder bei Beendigung der Mikroimpulse der Bewegungsparameter des Rohlings und/oder bei Erfassung einer vorgegebenen Anzahl bei Mikroimpulsen und/oder durch Auswertung des zeitlichen Abstands zwischen den Mikroimpulsen ein Auslösekriterium für den Pressbeginn festgelegt.

Mit der Erfindung lässt sich so der optimale Pressbeginn bestimmen und festlegen und damit die für den Presszyklus insgesamt aufgewendete Zeit nahe an das Optiumum heranführen.

Erfindungsgemäß wird - von den Bewegungsparametern her betrachtet - als Auslösekriterium für den tatsächlichen Pressvorgang das Auftreten von kurzzeitigen Mikrobewegungen überwacht und als Kriterium herangezogen. Es versteht sich, dass die Mikrobewegungen gegen die Pressrichtung gerichtet sind, aufgrund der Wärmeausdehnung des Gesamtsystems Pressstempel/Presskolben/Rohling/ Muffel/Brennkammermantel.

Der Pressstempel bewegt sich während des Aufheizens des Rohlings um ein vorgegebenes Maß gegen die Pressrichtung, das insbesondere weniger als 1mm und besonders bevorzugt zwischen 0,3 und 0,5mm beträgt., gemessen bei typischen Rohlingshöhen von 8 bis 16mm.

Für die Erfassung des Mikrobewegung, die sich im Grunde als Mikroimpuls eines Bewegungsparameters darstellt, ist primär ein Wegsensor oder ein Geschwindigkeitssensor geeignet. Die Auflösung sollte mindestens 0,01 mm oder eine entsprechende Geschwindigkeitsgröße betragen, bevorzugt 50 $\mu$m pro Sekunde.

Andernfalls, also beispielsweise, wenn die Presskraft über einen Schrittmotor mit einem nicht elastischen oder gering elastischen Antriebsstrang ausgeübt wird, ist auch die Realsierung eines Kraftsensors oder Drucksensors als Sensor für die Erfassung der Mikroimpulse möglich. Alternativ ist auch eine reine Wegmessung, gegebenenfalls bei einer Presskraft nahe Null, möglich.

Die Amplitude und Häufigkeit der Mikroimpulse hängt selbstverständlich von physikalischen Parametern ab, beispielsweise von dem zu pressenden Keramikmaterial, der verwendeten Einbettmasse, der Temperatur, aber auch beispielsweise der aufgebrachten Presskraft bzw. deren Regelung.

Die der Presskraft entgegenwirkende Wärmeausdehnung setzt sich im wesentlichen zusammen aus der Wärmeausdehnung des Pressstempels, des Presskolbens, der Rohlings, und der Muffel unterhalb des Rohlings. Auch der Isolationsbereich des Ofens unterhalb des Brennraumbodens wird noch etwas miterwärmt und dehnt sich dementsprechend aus.

Besonders günstig läßt sich auch die Tatsache ausnutzen, dass der Pressstempel in Kontakt mit dem zwischengeschalteten Presskolben und somit auch mit dem Rohling steht, bevorzugt unter einem Anpressdruck. Die Presskraft kann ohne Zeitverzögerung übertragen werden, ebenso wie die Rückwärtsbewegung bei der Materialausdehnung des Rohlings. Die Steuervorrichtung für die Steuerung des Pressvorgangs erfaßt nicht nur diese, sondern steuert auch den weiteren Verlauf des Temperatur-Zeitprofils.

Aufgrund der starken Wärmedämmung ist der Ofen typischerweise außen und damit an den tragenden Stellen die für das Schließen des Ofens zuständig sind, - zumindest in Relation zu heißen Brennraum betrachtet - praktisch kalt, typischerweise zwischen Raumtemperatur und 50°C, so dass die dort bestehende Erwärmung, die im Grunde der erfassbaren Wärmeausdehnung der vorstehend genannten Elemente mitwirkt, relativ gering ist.

Hierbei wird davon ausgegangen, dass die Heizung in an sich bekannter Weise als Ringheizung den zylindrischen Brennraum seitlich umschließt und durch Konvektion und Wärmestrahlung hauptsächlich die Muffel, aber auch natürlich den darin befindlichen Rohling und gegebenenfalls den Presskolben erwärmt, typischerweise in wenigen Minuten um mehrere 100°C. Bei typischen Pressöfen beträgt die Wandstärke der Wärmedämmung zehn Zentimeter oder mehr und liegt damit im Bereich des Durchmessers der Muffel oder darüber.

Die Erwärmung in dem Antriebsstrang aus Presskolben, Pressstempel, Rohling und Einbettmasse im unteren Teil sowie gegebenenfalls dem Brennteller und umgebenenden Teilen erzeugt einen Gegendruck auf den Pressantrieb.

Wenn keine Bewegungsimpulse mehr entstehen, ist die Erwärmung des Rohling soweit fortgeschritten, so dass der Rohling mindestens teigig geworden ist.

Grundsätzlich wäre bereits zu diesem Zeitpunkt das Pressen durch Einleiten der Presskraft möglich. Günstiger ist es jedoch, noch eine vorgegebene definierte Zeit, zuzuwarten und dann mit dem Pressen zu beginnen, um die Tatsache auszunutzen, dass die Viskosität eines Rohlings bei weiter zugeführter Wärme kontinuierlich weiter sinkt und bei etwa über eine definierte Zeit zugeführter Wärmemenge die optimale Viskosität für den Beginn des Pressvorgangs erreicht ist.

Erfindungsgemäß ist es möglich, während der erfindungsgemäßen Erfassung des Auslösekriteriums mit der gleichen Presskraft wie während des eigentlichen Pressens zu arbeiten.

Bevorzugt ist es jedoch, eine Hilfspresskraft zwischen dreißig und fünfzig Prozent der Nennpresskraft zu wählen, da diese bereits ausreicht, die erwünschte Bewegungshysterese zu erzeugen.

Es ist auch möglich, die Presskraft unmittelbar nach dem Zustellen des Pressstempels zum Presskolben - und damit indirekt zum Rohling - kurzzeitig auf einem vergleichweise hohem Wert zu halten, um eine stabile Anlage des Rohlings in der Muffel zu gewährleisten und dann eine Presskraftnachregelung vorzunehmen.

Der Zeitpunkt des optimalen Pressbeginns ab Erweichung des Rohlings hängt stark davon ab, wie rasch sich der Rohling ab diesem Zeitpunkt weiter erwärmt. Da größere Muffeln nicht nur eine größere Wärmekapazität, also auch eine größere Wärmedämmung haben, lässt sich die definierte Zeit bei größeren Muffeln von vornherein bevorzugt länger ansetzen, und bei kleineren Muffen dementsprechend kürzer.

In einer weiteren vorteilhaften Ausgestaltung ist es möglich, die Mikroimpulse, ihren Verlauf und ihre Abfolge auszuwerten und in einer Steuervorrichtung für den Dentalpressofen abzuspeichern. Je nach Material erfolgt eine andere Abfolge und eine andere Art von Mikroimpulsen, so dass ein Rohling einer bestimmten Größe und aus einem bestimmten Material über seine Mikroimpulse gleichsam eine Signatur hat. Diese kann in einer vorteilhaften Ausgestaltung für die Auswahl weiterer geeigneter Prozessparameter verwendet werden.

Auf Basis der Zeitdauer bis zum Erweichen des Rohlings kann auch eine jeweils optimale Wartezeit und Temperaturzeitsteuerung bis zum Pressbeginn bestimmt werden. Die Auswahl separater Programme abhängig von der verwendeten Muffelgrösse entfällt, was ein weiterer Vorteil insbesondere hinsichtlich des Bedienkomforts darstellt.

Ein weiterer Gesichtspunkt, der für die Genauigkeit der durchgeführten Messungen relevant ist, ist das Bereitstellen des Ofenunterdrucks vor Vornahme der Messung. Durch den Ofenunterdruck werden die Dichtungen zwischen Ofenhaube und Ofenunterseite, oder beispielsweise zwischen Ofenhaube und einem heranfahrbarem Brenntisch, auf das vorgegebene Maß komprimiert. Die Kompression kann durchaus im Bereich mehrerer Millimeter liegen und würde das Messergebnis verfälschen, wenn der Unterdruck während der Vorpresszeit, also während der Erfassung des Auslösekriteriums, aufgebaut würde.

Wenn - aus welchen Gründen auch immer - während dieser Zeit noch kein vollständiger Unterdruck, wie er während des Presszyklus erwünscht ist, bereitgestellt werden soll, muss zumindest dafür Sorge getragen werden, dass der Unterdruck im Ofeninnenraum während dieser Vorpresszeit konstant bleibt.

Typischerweise lässt sich aber - ausreichende Dichtheit des Ofens vorausgesetzt - der Unterdruck innerhalb einer deutlich geringeren als der erforderlichen Aufheizzeit des Ofens bereitstellen, beispielsweise innerhalb von 1 bis 2 Minuten.

Gemäß einer bevorzugten Ausführungsform ist für den Pressantrieb eine Kraftregelung vorgesehen. Aufgrund des Aufheizens und damit der Wärmeausdehnung des Antriebsstrangs (einschließlich des Rohlings) muss eine Nachregelung erfolgen, z. B. bei Überschreiten einer vorgegebenen Kraft. Bei entsprechend guter Einstellung dieser Nachregelcharakteristik können eine qualitativ und eine quantitativ gut interpretierbare Anzahl von Mikroimpulsen realisiert werden. Während der Erwärmung des Rohlings im noch festen Aggregatzustand nimmt der Abstand zwischen den Mikroimpulsen und/oder der Abstand zwischen Intervallen, bei denen eine Nachregelung der Kraft erfolgt, exponentiell zu.

Als Auslösekriterium lässt sich nun beispielsweise ein Ende der Mikroimpulsserie verwenden, angenähert durch das Ausbleiben eines Impulses beispielsweise über mehr als 50 Sekunden.

Es ist aber möglich, kurzerhand die Anzahl der Impulse zu zählen und basierend hierauf das Auslösekriterium festzulegen. Ferner ist es auch möglich, das Maß der Zeitdifferenz zwischen zwei aufeinander folgenden Impulsen als Auslösekriterium zu verwenden.

Weitere Vorteile, Einzelheiten und Merkmale ergeben sich aus der nachfolgenden Beschreibung eines Ausführungsbeispiels der Erfindung anhand der Zeichnungen.

Es zeigen:

Fig. 1 einen Schnitt durch den Brennraum eines erfindungsgemäßen Dentalpressofens in einer Ausführungsform;

Fig. 2 ein Diagramm zur Darstellung einer möglichen Heizkurve, auch im Vergleich mit einer unzulässigen Heizkurve;

Fig. 3 ein Diagramm der Geschwindigkeit des Pressstempels und weiterer physikalischer Größen, aufgetragen über die Zeit;

Fig. 4 ein Diagramm zur Darstellung des zunehmenden Abstands zwischen den Mikroimpulsen; und

Fig. 5 drei Diagramme zur Darstellung des Kraftverlaufs, des Geschwindigkeitsverlaufs und des Wegverlaufs während eines Mikroimpulses.

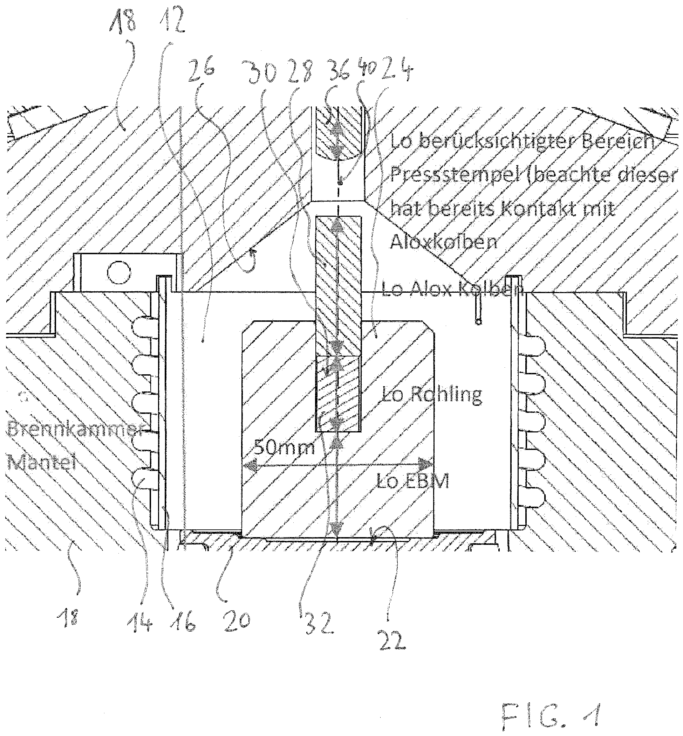

In Fig. 1 ist ein erfindungsgemäßer Dentalpressofen 10 im Schnitt in einem für die Erfindung relevanten Ausschnitt dargestellt.

Ein Brennraum 12 ist von einer schematisch dargestellten Heizvorrichtung 14 mit einer spiralig verlaufenden Heizwendel umgeben, die von einem Quarzglas 16 als Schutzvorrichtung abgeschirmt ist. Großvolumige Wärmedämmelemente 18 umgeben den Brennraum 12 allseitig, also auch nach unten, auch wenn dies aus Fig. 1 nicht ersichtlich ist.

Der Boden des Brennraums 12 ist von einem Brennteller 20 gebildet, der Vertiefungen 22 für die Aufnahme der Muffel 24 aufweist, und zwar abgestuft in unterschiedlichen Größen, in dem dargestellten Ausführungsbeispiel in zwei Größen.

Muffeln unterschiedlicher Größe werden benötigt, wenn Dentalrestaurationsteile, deren Negativform in der Muffel realisiert ist, in unterschiedlicher Größe gepresst und gebrannt werden soll. So benötigt beispielsweise eine vierzehngliedrige Brücke eine größere Muffel als drei Einzelkronen, die dementsprechend mit einer kleinen Muffel wie einer mit einer Muffelmasse von 100g gebrannt werden können. Typisch sind insofern Muffelgrößen von 100, 200, und 300g.

Der Brennraum 12 weist einen Dachkonus 26 auf, der den Brennraum nach oben hin zentral vergrößert. In diesem Bereich ist ein Teil eines Presskolbens 28 aufgenommen, der in einem Presskanal 30 eingesteckt ist, anliegend an einen Rohling 32, der vollständig in der Muffel 24 in dem Presskanal 30 aufgenommen ist.

Unterhalb des Rohlings erstrecken sich nicht dargestellte Anstiftkanäle und Formräume für Dentalrestaurationsteile. In an sich bekannter Weise ist der Durchmesser der Anstiftkanäle wesentlich geringer als der Durchmesser des Presskanals 30, so dass der Rohling 32 erst bei Erweichung beginnen kann, in die Anstiftkanäle einzutreten.

Der Presskolben kann aus einem beliebigen geeigneten Material bestehen, beispielsweise aus $Al_2O_3$ oder aus Einbettmasse selbst.

In einem Pressstempelkanal ist ein Pressstempel 36 geführt, der über eine Antriebsvorrichtung angetrieben ist und Druck auf den Presskolben 28 und damit indirekt auf den Rohling 32 auszuüben vermag.

Für den Betrieb des Dentalpressofens wird dieser nun zunächst geöffnet. Eine in einem sogenannten Vorwärmofen beispielsweise auf 850°C vorgewärmte Muffel, in die ein kalter Rohling 32 und ein kalter Presskolben 28 bereits eingeführt sind, wird auf den Brennteller 20 zentral abgestellt. Die Vertiefung 22 passt zu in ihren Abmessungen exakt zu der zugehörigen Muffel 24, so dass die Muffel 24 exakt zentral steht. Die Ofenhaube wird geschlossen und eine Unterdruckquelle saugt die in dem Brennraum 12 und in den Wärmedämmelementen vorhandene Luft ab, bis ein Unterdruck entsteht.

Dichtungen sind zwischen einem Ofenunterbau und der Brennhaube des Ofens vorgesehen, die durch den Aufbau des Unterdrucks zusammengedrückt werden. Der Aufbau des Unterdrucks ist in ein bis zwei Minuten erfolgt, und während des gesamten folgenden Presszyklus wird der Unterdruck konstant gehalten, beispielsweise durch eine Druckregelung der Unterdruckquelle oder aber, indem die entsprechende Saugpumpe laufen gelassen wird.

Sobald der Rohling 32 in die Muffel 24 eingeführt ist, beginnt die Erwärmung des Rohlings 32, der gegenüber der Muffel 24 eine wesentlich geringere Masse aufweist. Der Rohling dehnt sich hierdurch aus, wobei die Vorwärmtemperatur deutlich unterhalb der Erweichungstemperatur liegt. Der Rohling ist mit einem geringen Spiel in dem Presskanal 30 geführt. Der Wärmeausdehnungskoeffizient der Muffel 24, also der Einbettmasse, die für die Ausbildung der Muffel verwendet wird, ist deutlich geringer als der Wärmeausdehnungskoeffizient des Rohlings, aber auch des Presskolbens und des Pressstempels, wobei der Pressstempel beispielsweise ebenfalls aus $Al_2O_3$ bestehen kann oder aber beispielsweise auch aus Stahl.

Im hier dargestellten Ausführungsbeispiel beträgt der Wärmeausdehnungskoeffizient der Muffel 3 x $10^{-6}$/°K und der des Rohling 10 x $10^{-6}$/°K, und derjenige des Pressstempels 8 x $10^{-6}$/°K.

Bei der hier betrachteten Wärmeausdehnung in axialer Richtung addieren sich die Wärmeausdehnungen $L_0$ bei Erwärmung. Die Gesamtwärmeausdehnung $L_{0\,ges}$ beträgt:

$$L_{0\,ges} = L_{0\,EBM} + L_{0\,Rohling} + L_{0\,Aloxkolben} + L_{0\,Pressstempel}$$

Hierbei muss der Pressstempel 30 nur soweit berücksichtigt werden, wie er erwärmt wird, also in dem dem Brennraum benachbarten Bereich der Wärmedämmelemente 18.

Das gegenüberliegende Ende des Pressstempels 36, das mit der Antriebsvorrichtung verbunden ist, ist deutlich weniger heiß, beispielsweise unter 100°C.

Der Temperaturgradient des Pressstempels 36 ist insbesondere dann hoch, wenn ein Pressstempel beispielsweise aus $Al_2O_3$ verwendet wird; bei Verwendung eines metallischen Pressstempels kann auch ein zusätzlicher Wärmedämmzylinder in den Pressstempel eingebaut sein.

$L_{0\,EBM}$ bedeutet die axiale Länge der Muffel oder Einbettmasse unterhalb des Presskanals 30.

Bei der betrachteten Ausführungsform eines Dentalpressofens ist der Brennteller 20 lediglich oberflächlich warm und im unteren Bereich bereits vergleichsweise kühl. Dies gilt jedoch nicht, wenn eine sogenannte Fußheizung eines Brennraums realisiert ist, also wenn unterhalb des Brenntellers 22 eine weitere Heizung vorgesehen ist. Bei dieser Ausführungsform muss die zusätzliche Wärmeausdehnung im dortigen Bereich zu der vorstehenden Gesamtwärmeausdehnung hinzuaddiert werden.

Um den axialen Versatz des Pressstempels 36 durch die Wärmeausdehnung zu ermitteln, ist von $L_{0\,ges}$ die Wärmeausdehnung des Pressofens selbst bei der Erwärmung abzuziehen. Hierbei ist jedoch zu berücksichtigen, dass typischerweise die Dichtung und die Schließkraft des Ofens weit außen realisiert sind und dass dort die Wärmeausdehnung typischerweise auf den Bereich zwischen Raumtemperatur und einer Temperatur unter 100°C, beispielsweise 60°C, beschränkt bleibt; die Wärmedämmelemente 18, die zumindest innen sehr heiß werden, üben keine axiale Kraft aus, sondern liegen locker in dem Dentalpressofen auf.

Unter axial sei hier die Achse 40 des Pressstempels 36 zu verstehen, die zentral sowohl durch den Presskolben als auch den Rohling 32 als auch die Muffel 24 als auch den Brennteller 20 hindurch verläuft; sämtliche Teile sind in dem dargestellten Ausführungsbeispiel kreissymmetrisch ausgebildet.

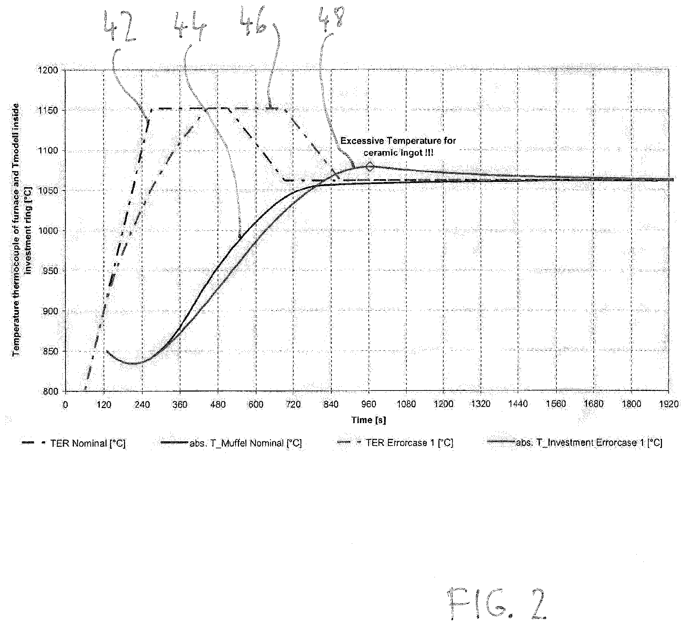

Aus Fig. 2 ist eine typische Brenn/Presskurve in zwei Ausgestaltungen ersichtlich. Bei der Temperaturkurve 42 wird die Vorgabe der sogenannten Temperaturzeitflächenüberwachung gemäß der EP 1 915 972 B1 eingehalten. Dies führt zu der Muffeltemperaturkurve 44. Wie ersichtlich ist, steigt die Muffeltemperaturkurve bei zutreffender Programmführung gemäß der Heiztemperaturkurve 42 nicht über 1065°C an, so dass der Rohling nicht geschädigt werden kann.

Die Heiztemperaturkurve 46 berücksichtigt hingegen nicht die Vorgaben der Temperaturzeitflächenüberwachung gemäß der EP 1 915 972 B1 - obwohl die Maximaltemperatur von 1150°C nicht überschritten ist und die Zeitdauer der Maximaltemperatur nicht größer als bei der Heiztemperaturkurve 42 ist.

Dennoch führt diese Heiztemperaturkurve zur Muffeltemperaturkurve 48, und es ist ersichtlich, dass eine Muffeltemperatur von 1075°C zum Zeitpunkt 960 Sekunden erreicht wird, was zu einer Schädigung des Rohlings führen kann. Der erfindungsgemäße Dentalpressofen wird von einer nicht dargestellten Steuervorrichtung gesteuert.

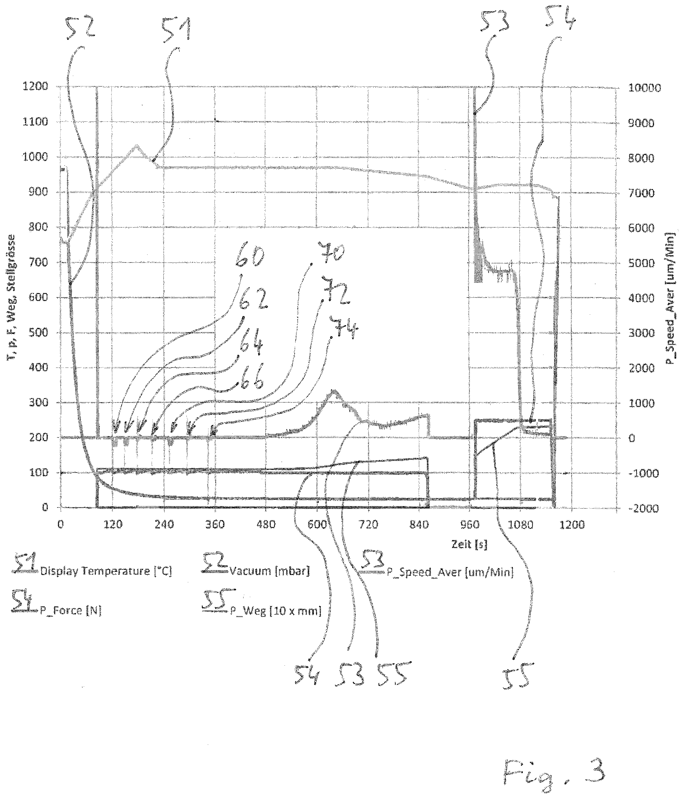

Die erfindungsgemäße Lösung lässt sich besonders günstig mit den ordnungsgemäßen Vorgaben gemäß EP 1 915 972 B1 kombinieren, ist aber grundsätzlich hiervon unabhängig. Die erfindungsgemäße Lösung sei nun anhand des Diagramms Fig. 3 erläutert.

In Fig. 3 sind fünf Kurven im gleichen Diagramm eingetragen, wobei die Abszisse die Zeit ist.

Hierbei handelt es sich um folgende Werte:
Die Temperaturkurve 51 zeigt die im Display des Brennofens angezeigte Temperatur, gemessen über einen an sich bekannten Temperaturfühler im Brennraum.

Die Druckkurve 52 zeigt den Druck im Innenraum des Dentalpressofens.

Die Geschwindigkeitskurve 53 zeigt die Geschwindigkeit des Pressstempels 36 beziehungsweise der zugehörigen Antriebsvorrichtung.

Der Nullpunkt der Ordinate ist hierbei höhenversetzt und die Geschwindigkeitswerte in $\mu$m/min sind rechts eingetragen.

Die aufgebrachte Presskraft ist in der Presskraftkurve 54 eingetragen.

Der zurückgelegte Weg des Pressstempels 36 ist in der Wegkurve 55 eingetragen.

Wie aus Fig. 3 ersichtlich ist, ist der Dentalpressofen 10 beim betrachteten Beginn bereits vorgeheizt, auf etwa 750°C. Die Heizung ist weiter eingeschaltet, und gemäß Temperaturzeitflächenüberwachung (vergleiche Fig. 2) wird die Aufheizung vorgenommen, wobei die Zieltemperatur im betrachteten Ausführungsbeispiel zwischen 900°C und 1000°C liegt.

Wie aus der Druckkurve 52 ersichtlich ist, nimmt der Druck im Dentalpressofen innerhalb der ersten 20 Sekunden rasch ab und beträgt bei 120 Sekunden 50 mbar. Spätestens bei 240 Sekunden ist der Enddruck von 25 mbar erreicht. Dieser wird während des gesamten Presszyklus konstant gehalten.

Aus der Geschwindigkeitskurve 53 ist ersichtlich, dass bei etwa 90 Sekunden mit dem dortigen Peak der Geschwindigkeit der Pressstempel rasch herangeführt wird, bis Pressstempel, Presskolben und Rohling aneinander anliegen. Der Rohling liegt hierbei auf der Stirnfläche des Presskanals 30 in der Muffel 24 auf.

Ab 90 Sekunden bis ca. 120 Sekunden beträgt die Geschwindigkeit 0, wie aus Fig. 3 ersichtlich ist.

Bei etwas über 120 Sekunden entsteht ein erfindungsgemäßer Mikroimpuls 60 mit einer negativen Geschwindigkeit. Dieser entspricht einer Wärmeausdehnung $\Delta L_{0\,ges}$, wie es mit Bezug auf Fig. 1 erläutert wurde. Der Mikroimpuls hat eine Größe von etwa 200 $\mu$m/min und eine Dauer von weniger als einer Sekunde, abhängig von der Güte der Presskraftregelung - wenn dies auch aus Fig. 3 basierend auf der hier dargestellten Ausführung nicht klar ersichtlich ist.

Das obere Ende des Rohlings 32 rutscht gleichsam ein bißchen nach oben, entgegen der Wirkung des Pressdrucks gemäß der Presskurve 54.

Bis zum Zeitpunkt 145 Sekunden bleibt die Geschwindigkeit 54 dann erneut konstant 0, und zu diesem Zeitpunkt erfolgt der nächste Mikroimpuls 64 entsteht bei etwa 180 und der nächstfolgende 66 bei 225 Sekunden. Hieran schließen sich weitere Mikroimpulse 70, 72 und 74 bei 250, 290 und 340 Sekunden an, während der folgende Zeitabschnitt bis 480 Sekunden mikroimpulsfrei verbleibt.

Dies bedeutet erfindungsgemäß, dass der Rohling 32 teigig beziehungsweise viskos geworden ist; die weitere Wärmeausdehnung erfolgt insofern impulsfrei. Diese Tatsache wird erfindungsgemäß als Indiz gewertet, dass der Rohling die tatsächlich erwünschte Temperatur zur Vorbereitung des eigentlichen Pressvorgangs erreicht hat.

Bis zum Zeitpunkt 860 Sekunden wird der Rohling 32 weiter weich, und dringt partiell bereits in die Anstiftkanäle ein.

Hieran anschließend wird eine Sicherheits-Ruhezeit von im Beispielsfalle 120 Sekunden eingehalten, und hieran schließt sich dann der eigentliche Pressvorgang mit erhöhter Presskraft an.

Wie ersichtlich ist, dringt der Rohling dann rasch in die Dentalrestaurationsräume ein, bis zum Zeitpunkt 1040 Sekunden die Vortriebsgeschwindigkeit gemäß der Geschwindigkeitskurve 53 wieder nahezu auf 0 sinkt. Dies bedeutet, dass sämtliche Hohlräume für die Bereitsstellung der Dentalrestauration gefüllt sind.

Wie aus Fig. 3 ebenfalls ersichtlich ist, beträgt die Presskraft zum Beginn der Zustellung des Pressstempels 36 100N. Sie bleibt konstant bis zum Zeitpunkt 860 Sekunden, wird dann auf Null zurückgefahren. Zwischen 980 Sekunden und 1140 Sekunden und 1130 Sekunden beträgt die Presskraft 250N. Zwischen 1130 und 1140 Sekunden wird sie dann kontinuierlich auf Null zurückgefahren.

Aus der Wegkurve 55 ist ersichtlich, dass sich während der Mikroimpulse 60 bis 74 Mikrobewegungen in Negativrichtung, also entgegen der Bewegungsrichtung des Pressantriebes, einstellen. Auch wenn dies nicht gesondert erläutert ist, entspricht der Wert 100 hier der Nulllinie der Bewegungen. Ab etwa 480 Sekunden entsteht eine zunächst geringe und dann zunehmende Bewegung mit einem entsprechend zurückgelegten Weg, bis die Bewegung bei 460 Sekunden abbricht und dann bei 980 Sekunden erneut aufgenommen wird. Die Bewegung entspricht natürlich dem Integral der Geschwindigkeit, entsprechend der zunehmenden Steigung bis etwa 1080 Sekunden, wobei die Bewegung wiederum bei 1140 Sekunden abgeschlossen ist.

Wie aus Fig. 3 ersichtlich ist, wird mit der eigentlichen Pressung nicht unmittelbar anschließend an den letzten Mikroimpuls 74 begonnen. Es werden zwei unterschiedliche Haltezeiten realisiert, wobei es sich versteht, dass es erfindungsgemäß auch möglich ist, mit lediglich einer Haltezeit zu arbeiten bzw. auch ohne und beispielsweise mit einem ab diesem Zeitpunkt zunehmenden Pressdruck - also keiner Presspause und einem konstanten Pressdruck wie hier dargestellt ist.

Für die Erfassung der Mikroimpulse ist es grundsätzlich möglich, eine Geschwindigkeitserfassung, eine Wegerfassung oder aber eine Presskrafterfassung vorzunehmen, je nach Auflösung der zur Verfügung stehenden Sensoren und je nach Elastizität des Antriebs. Bei Versuchen im Zusammenhang mit dem hier zu Rede stehendem Ausführungsbeispiel hat sich eine Presskrafterfassung als die vorteilhafteste herausgestellt, wobei allerdings auch eine Wegerfassung grundsätzlich möglich ist.

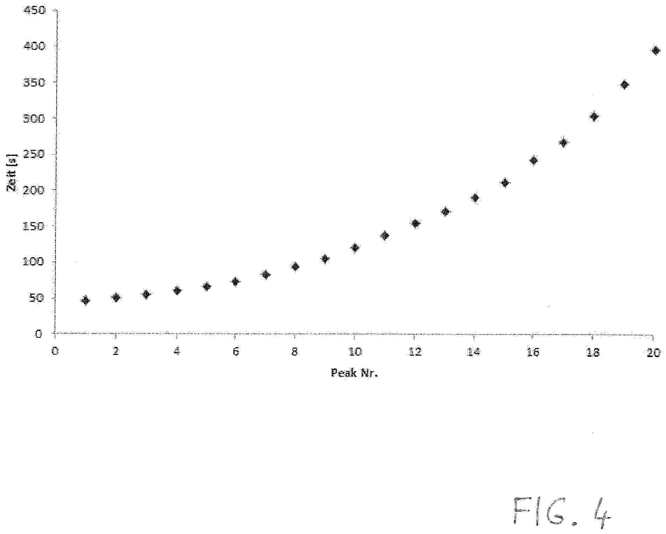

Aus Fig. 4 ist ersichtlich, in welcher Weise sich die Mikroimpulse bei einem weiteren Pressversuch eingestellt haben. Hier ist die verstrichene Zeit über dem betreffenden Mikroimpuls oder Peak aufgetragen. Es ist ersichtlich, dass die Kurve im wesentlichen einen exponentiellen Verlauf hat, das also die Zeitdauer zwischen den einzelnen Impulsen exponentiell zunimmt. Beispielsweise beträgt der Zeitunterschied zwischen dem ersten und dem zweiten Mikroimpuls lediglich fünf Sekunden, zwischen dem 19. und dem 20. hingegen sechzig Sekunden.

Auch das Überschreiten einer Zeitdauer zwischen zwei Peaks kann als Auslösekriterium für den eigentlichen Pressbeginn herangezogen werden.

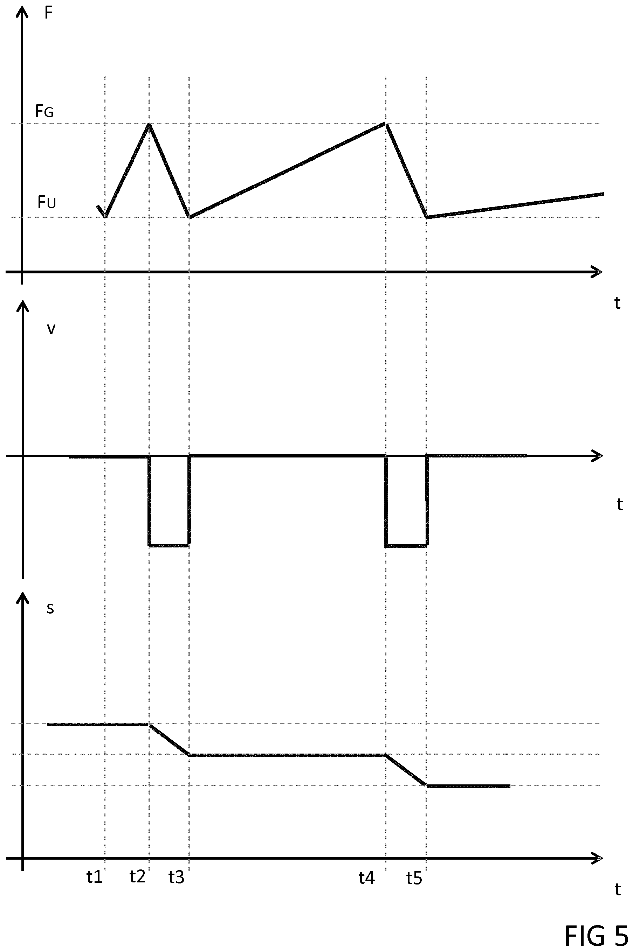

Aus Fig. 5 ist in schematischer Weise ersichtlich, in welcher Weise sich ein Mikroimpuls, beispielsweise der Mikroimpuls 60 bezogen auf die Kraft, die Geschwindigkeit und die Strecke darstellt.

Die oberste Kurve zeigt die Kraft F, die bei Kontakt mit dem Rohling aufgrund der Wärmeausdehnung bis zu einem Grenzwert $F_G$ zunimmt. Es erfolgt eine Materialentspannung durch das Nachregeln der Presskraft ab dem Zeitpunkt $t_2$ bis zum Zeitpunkt $t_3$. Zu diesem Zeitpunkt erreicht die eingeleitete Kraft wieder ihren Sollwert $F_U$, und aufgrund der weiteren aber bei zunehmender Erwärmung des Rohlings geringer werdenden Wärmeausdehnung steigt die bestehende Kraft wieder an, bis zum Zeitpunt t4 wieder der Grenzwert $F_G$ erreicht wird und erneut eine Nachregelung stattfindet.

Im mittleren Diagramm von Fig. 5 ist die Geschwindigkeit während der Verfahrbewegung des Pressantriebes aufgetragen

Entsprechendes gilt für den Weg S, der im unteren Diagramm von Fig. 5 dargestellt ist. Bis zum Zeitpunkt $t_2$ verhindert der arretierte Pressantrieb eine Bewegung, die Kraft steigt aufgrund der Wärmeausdehnung an. Ab dem Zeitpunkt $t_2$ wird die Kraft nachgeregelt. Die Position der Grenzfläche zwischen Rohling und Presskolben verschiebt sich nun. Erneut verbleibt der Pressantrieb für die Zeit $t_3$ bis $t_4$ auf der gleichen Höhe. Bei Erreichen des Grenzwertes $F_G$ im Zeitpunkt $t_4$ erfolgt wiederum eine Nachregelung, die Grenzfläche zwischen Rohling und Presskolben verschiebt sich weiter in Richtung der Wärmeausdehnung als Folge einer weiteren Temperaturzunahme.

Es sei angemerkt, dass in Fig. 5 Bewegungen entgegen der Pressantriebsverfahrrichtung, als negative Bewegungen dargestellt werden. Ebenso bedeutet ein Zurückfahren des Pressantriebes bei der gezeigten Nachregelung eine negative Geschwindigkeit.

Ein weiterer insofern erfindungsgemäß relevanter Gesichtspunkt ist es, dass ein unterschiedlicher Wärmeausdehnungskoeffizient zwischen dem Material der Muffel 24 und dem Material des Rohlings 32 besteht, der eine Relativbewegung bei Erwärmung gewährleistet, wenn auch im deutlichen Submilimeterbereich.

**Patentansprüche**

1. Dentalpressofen, mit einem Pressstempel (36), der - gegebenenfalls über einen zwischengeschalteten Presskolben (28) - auf einen Rohling (32) aus insbesondere keramischer Masse wirkt, wobei der Rohling (32) in einem Presskanal (30) geführt ist, der in einer Muffel (24) ausgebildet ist und wobei ein Druck-, Weg- und/oder GeschwindigkeitsSensor mindestens einen Bewegungsparameter des Pressstempels (36) erfasst, und mit einer Steuervorrichtung für die Steuerung des Pressvorgangs basierend auf dem Ausgangssignal des Sensors, **dadurch gekennzeichnet, dass** das Auslösekriterium für den Pressbeginn eine über den Sensor erfasste Änderung mindestens eines Bewegungsparameters des Pressstempels bei Erwärmung und/oder Erweichung des Rohlings ist.

2. Dentalpressofen nach Anspruch 1, **dadurch gekennzeichnet, dass** das Auslösekriterium die Beendigung von Mikroimpulsen des Bewegungsparameters und/oder deren Anzahl und/oder deren zeitlicher Abstand ist.

3. Dentalpressofen nach Anspruch 1, **dadurch gekennzeichnet, dass** die Mikroimpulse (60 bis 74) eine geringe und kurzzeitige Bewegung zwischen dem pressstempelnahen Ende des Rohlings (28) und der umgebenden Muffel (24) wiedergeben.

4. Dentalpressofen nach Anspruch 1, **dadurch gekennzeichnet, dass** die Steuervorrichtung eine Rückwärtsbewegung des Pressstempels entsprechend der Wärmeausdehnung des Rohlings über den Sensor erfasst und das Auslösekriterium ein Ende der Rückwärtsbewegung und/oder der Beginn einer Vorwärtsbewegung und/oder ein definierter Zeitpunkt nach einer Änderung von Bewegungsparametern des Pressstempels ist.

5. Dentalpressofen nach einem der vorhergehenden Ansprüche, **dadurch gekennzeichnet, dass** der Sensor unterhalb der Erweichungstemperatur des Rohlings (32) die der Presskraft entgegenwirkende Wärmeausdehnung der Muffel (24), gegebenenfalls des Presskolbens (28), des Pressstempels (36) und des Rohlings (32), insbesondere die aufsummierte Wärmeausdehnung dieser, erfasst.

6. Dentalpressofen nach einem der vorhergehenden Ansprüche, **dadurch gekennzeichnet, dass** der Sensor die der Erweichung des Rohlings (32) entsprechende abnehmende Gegenkraft aufgrund von Wärmeausdehnungskoeffizienten oder aufgrund von Differenzen zwischen Wärmeausdehnungskoeffizienten der Steuervorrichtung zuleitet, wobei diese den Pressbeginn auf einen Zeitpunkt nach dem Zeitpunkt der Erfassung der Erweichung des Rohlings festlegt.

7. Dentalpressofen nach einem der vorhergehenden Ansprüche, **dadurch gekennzeichnet, dass** die Steuervorrichtung den Pressstempel (36) vor den eigentlichen Pressvorgang - gegebenenfalls über den zwischengeschalteten Pressstempel (36) - an den Rohling (32) anlegt und die Wärmeausdehnung des Rohlings (32) - entsprechend einer Bewegung des Pressstempels (36) gegen die Pressrichtung - erfasst und beim Ausbleiben der weiteren Wärmeausdehnung beziehungsweise bei der Erweichung die abnehmende Gegenkraft als inbesondere zusätzliches Auslösekriterium heranzieht.

8. Dentalpressofen nach einem der vorhergehenden Ansprüche, **dadurch gekennzeichnet, dass** die Steuervorrichtung den Pressstempel (36) eine Presskraft beziehungsweise einen Pressdruck auf den Rohling (32) ausüben lässt, auch bevor der Rohling (32) erweicht ist.

9. Dentalpressofen nach einem der vorhergehenden Ansprüche, **dadurch gekennzeichnet, dass** basierend auf dem von dem Sensor erfassten Bewegungsparameter, dem von dem Pressstempel (36) ausgeübten Pressdruck und/oder der Temperatur eines Temperatursensors, der im oder am Brennraum (12) angebracht ist, die Steuervorrichtung die Art, die Masse und/oder dem Material des Rohlings (32) basierend auf dessen Erwärmungsprofil - ggf. auf anderen vorgegebenen Signaturen - und/oder die umgebende Muffel basierend auf deren Signatur, erkennt und basierend hierauf den Pressvorgang steuert.

10. Dentalpressofen nach einem der vorhergehenden Ansprüche, **dadurch gekennzeichnet, dass** der Brennraum (12) des Dentalpressofens (10) unter Unterdruck gesetzt und die zugehörigen Dichtungen komprimiert sind, bevor der Sensor den mindestens einen Bewegungsparameter erfasst.

11. Dentalpressofen nach einem der vorhergehenden Ansprüche, **dadurch gekennzeichnet, dass** während der Erfassung des Bewegungsparameters der Pressstempel (36) eine konstante Kraft oder eine einem vorgegebenen Profil folgende Kraft auf den Rohling (32) - gegebenenfalls über den zwischengeschalteten Presskolben (28) - ausübt und der Bewegungsparameter erfasst wird, nachdem der Pressstempel (36) - gegebenenfalls über den Presskolben (28) - an dem Rohling (32) anliegt.

12. Dentalpressofen nach einem der vorhergehenden Ansprüche, **dadurch gekennzeichnet, dass** der Pressstempel (36) sich während des Aufheizens des Rohlings (32) um ein vorgegebenes Mafs bewegt, das insbesondere weniger als 1mm und besonders bevorzugt zwischen 0,3 und 0,5mm beträgt.

13. Dentalpressofen nach einem der vorhergehenden Ansprüche, **dadurch gekennzeichnet, dass** die Steuervorrichtung die Anzahl der Mikroimpulse (60 bis 74) der Bewegungsparameter und/oder deren Abstand und/oder der Änderung deren Abstands und/oder deren Größe erfasst.

14. Verfahren zum Betrieb eines Dentalpressofens (10) basierend auf einer Steuervorrichtung für die Steuerung des Pressvorgangs, bei welchem Pressvorgang ein Pressstempel (36) - gegebenenfalls über einen zwischengeschalteten Presskolben (28) - auf einen Rohling (32) aus insbesondere keramischer Masse wirkt und Druck ausübt, wenn der Rohling (32) in einen Presskanal (30) in einer Muffel (24) eingeführt ist, wobei ein Druck-, Weg- und/oder Geschwindigkeitssensor mindestens einen Bewegungsparameter des Pressstempels erfasst und wobei die Steuervorrichtung den Pressvorgang basierend auf einem Ausgangssignal des Sensors steuert, **dadurch gekennzeichnet, dass** das Auslösekriterium für den Pressbeginn eine über den Sensor erfasste Änderung mindestens eines Bewegungsparameters des Pressstempels, entsprechend der Erwärmung und/oder Erweichung des Rohlings, ist.

**Claims**

1. A dental press furnace having a press stamp (36) which eventually acts on a blank (32), especially made of ceramic mass, via an Interposed press piston (28), the blank (32) being guided in a compression channel (30) formed in a muffle (24), and a pressure sensor, displacement sensor and/or speed sensor detecting at least one movement parameter of the press stamp (36), and having a control device for controlling the pressing operation based on the output signal of the sensor, **characterized In that** the initiation criterion for the start of pressing is a change, detected by the sensor, in at least one movement parameter of the press plunger when the blank is heated and/or softened.

2. The dental press furnace according to claim 1, **characterized in that** the initiation criterion is the termination of micropulses of the motion parameter and/or the number and/ or time interval thereof.

3. The dental press furnace according to claim 1, **characterized in that** the micropulses (60 to 74) represent a small and short-term movement between the end of the blank (28) adjacent to the press die and the surrounding muffle (24).

4. The dental press furnace according to claim 1, **characterized in that** the control device detects a backward movement of the press plunger via the sensor, the movement corresponding to the thermal expansion of the blank, and the Initiation criterion is represented by terminating the backward movement and/or starting a forward movement and/or a defined point in time following a change in movement parameters of the press plunger.

5. The dental press furnace according to one of the preceding claims, **characterized in that** the sensor detects the thermal expansion of the muffle (24) counteracting the press force, optionally of the press plunger (28), the press stamp (36) and the blank (32), below the softening temperature of the blank (32), and especially detects the summed thermal expansion thereof.

6. The dental press furnace according to one of the preceding claims, **characterized In that** the sensor supplies the decreasing counterforce corresponding to the softening of the blank (32) to the control device on the basis of coefficients of thermal expansion or on the basis of differences between coefficients of thermal expansion, the control device setting the start of pressing at a time following the time detecting the softening of the blank.

7. The dental press furnace according to one of the preceding claims, **characterized in that** the control device applies the press stamp (36) to the blank (32) prior to the actual pressing operation, via the interposed press stamp (36), if appropriate, and detects the thermal expansion of the blank (32) in accordance with a movement of the press stamp (36) against the pressing direction, and especially uses the decreasing counterforce as an additional initiation criterion in the absence of further thermal expansion or in the case of softening.

8. The dental press furnace according to one of the preceding claims, **characterized in that** the control device allows a pressing force to be applied onto the blank (32) by the press stamp (36), even prior to softening the blank (32).

9. The dental press furnace according to one of the preceding claims, **characterized in that**, the control device detects the type, the mass and/or the material of the blank (32) based on the heating profile thereof, optionally based on other predetermined signatures, and/or detects the surrounding muffle based on the signature thereof, based on the movement parameter detected by the sensor, the pressing pressure exerted by the press stamp (36) and/or the temperature of a temperature sensor mounted In or at the combustion chamber (12), thus controlling the pressing process based thereon.

10. The dental press furnace according to one of the preceding claims, **characterized in that** the combustion chamber (12) of the dental press furnace (10) Is set under vacuum and the associated seals are compressed before the sensor detects the at least one movement parameter.

11. The dental press furnace according to one of the preceding claims, **characterized in that**, during detection of the movement parameter, the press stamp (36) exerts a constant force or a force following a predetermined profile on the blank (32) optionally via the interposed press plunger (28), and detecting the movement parameter after the press stamp (36) optionally abuts the blank (32) via the press plunger (28).

12. The dental press furnace according to one of the preceding claims, **characterized in that** the press stamp (36) moves during heating of the blank (32) by a predetermined dimension which especially is less than 1 mm and especially preferably is between 0.3 and 0.5 mm.

13. The dental press furnace according to one of the preceding claims, **characterized In that** the control device detects the number of micropulses (60 to 74) of the movement parameters and/or the spacing thereof and/or the change in spacing and/or magnitude thereof.

14. A method for operating a dental press furnace (10) based on a control device for controlling the pressing operation, in which pressing operation a press stamp (36) eventually acts on a blank (32) via an interposed press piston (28), especially of ceramic material, and pressure Is applied when the blank (32) is introduced into a compression channel (30) in a muffle (24), wherein a pressure sensor, displacement sensor and/or speed sensor detects at least one movement parameter of the press plunger, and the control device controlling the pressing operation on the basis of an output signal of the sensor, **characterized in that** the initiation criterion for starting the pressing operation is a change In at least one movement parameter of the press plunger detected via the sensor, corresponding to heating and/or softening of the blank.

**Revendications**

1. Four de pressée dentaire, avec un poinçon de presse (36), qui agit - le cas échéant par le biais d'un piston de compression (28) Interposé - sur un lingotin (32) en particulier à partir d'une masse en céramique, où le lingotin (32) est introduit dans un canal de pressage (30), qui est formé dans un moufle (24) et où un capteur de pression, de déplacement et/ou de vitesse saisit au moins un paramètre de mouvement du poinçon de presse (36), et avec un dispositif de commande pour la commande du processus de pressage basée sur le signal de sortie du capteur, **caractérisé en ce que** le critère de déclenchement pour démarrer le pressage est la modification d'au moins un paramètre de mouvement du poinçon de presse saisie par le capteur lors de l'échauffement et/ou du ramollissement du lingotin.

2. Four de pressée dentaire selon la revendication 1, **caractérisé en ce que** le critère de déclenchement est la cessation de micro-pulsations du paramètre de mouvement et/ou le nombre de celles-ci et/ou l'Intervalle de temps entre celles-ci.

3. Four de pressée dentaire selon la revendication 1, **caractérisé en ce que** les micro-pulsations des Impulsions (60 à 74) reflètent un mouvement léger et de courte durée entre l'extrémité du lingotin (28) près du poinçon de presse et le moufle qui l'entoure (24).

4. Four de pressée dentaire selon la revendication 1, **caractérisé en ce que** le dispositif de commande détecte un déplacement vers l'arrière du poinçon de presse selon la dilatation thermique du lingotin par le capteur et le critère de déclenchement est une fin du déplacement vers l'arrière et/ou le début d'un mouvement vers l'avant ou un moment défini après un changement des paramètres de mouvement du poinçon de presse.

5. Four de pressée dentaire selon l'une des revendications précédentes, **caractérisé en ce qu'**en dessous de la température de ramollissement du lingotin (32) le capteur détecte la dilatation thermique agissant contre la force de presse du moufle (24), le cas échéant du piston de compression (28), du poinçon de presse (36) et du lingotin (32), en particulier la somme accumulée de la dilatation thermique de ceux-ci.

6. Four de pressée dentaire selon l'une des revendications précédentes, **caractérisé en ce que** le capteur transmet la force antagoniste décroissante correspondant au ramollissement du lingotin (32) en raison des coefficients de dilatation thermique, ou en raison de différences entre coefficients de dilatation thermique du dispositif de commande, où celle-ci fixe le démarrage de la presse à un moment postérieur à l'instant de la détection du ramollissement du lingotin.

7. Four de pressée dentaire selon l'une des revendications précédentes, **caractérisé en ce qu'**avant le processus de pressage réel, le dispositif de commande met le poinçon de presse (36) - le cas échéant par le biais d'un poinçon de presse (36) interposé - contre le lingotin (32) et détecte la dilatation thermique du lingotin (32) - selon un mouvement du poinçon de presse (36) dans le sens inverse de la presse - et en cas d'absence d'expansion thermique ou lors du ramollissement attire la force antagoniste décroissante en particulier comme critère de déclenchement supplémentaire.

8. Four de pressée dentaire selon l'une des revendications précédentes, **caractérisé en ce que** le dispositif de commande fait exercer le poinçon de presse (36) une force de pressage ou une pression de pressage sur le lingotin (32) même avant le ramollissement du lingotin (32).

9. Four de pressée dentaire selon l'une des revendications précédentes, **caractérisé en ce que** basé sur les paramètres de mouvement détectés par le capteur, la pression de pressage exercée par le poinçon de presse (36) et/ou la température d'un capteur de température, qui est installé dans la chambre de combustion (12), le dispositif de commande reconnaît la nature, la masse et/ou le matériau du lingotin (32) basée sur son profil d'échauffement - le cas échéant sur d'autres signatures prédéterminés - et/ou le moufle entourant basé sur leur signature et basé dessus commande le processus de pressage.

**10.** Four de pressée dentaire selon l'une des revendications précédentes, **caractérisé en ce que** la chambre de combustion (12) du four de pressée dentaire (10) est mise en dépression et les joints correspondants sont comprimés, avant la détection par le capteur dudit au moins un paramètre de mouvement.

**11.** Four de pressée dentaire selon l'une des revendications précédentes, **caractérisé en ce que** lors de la détection des paramètres de mouvement le poinçon de presse (36) exerce une force constante ou une force suivant un profil prédéfini sur le lingotin (32) - le cas échéant par le biais du piston de compression (28) interposé - et le paramètre de mouvement est détecté après que le poinçon de presse (36) colle le lingotin (32) - le cas échéant, par le biais du piston de compression (28).

**12.** Four de pressée dentaire selon l'une des revendications précédentes, **caractérisé en ce que** le poinçon de presse (36) se déplace lors de l'échauffement du lingotin (32) dans une mesure prédéterminée, en particulier moins de 1 mm et de manière particulièrement privilégiée entre 0,3 et 0,5 mm.

**13.** Four de pressée dentaire après l'une des revendications précédentes, **caractérisé en ce que** le dispositif de commande le nombre de micro-pulsations (60 à 74) des paramètres de mouvement et/ou la distance entre elles et/ou les changements de la distance entre elles et/ou leur taille.

**14.** Procédé pour faire fonctionner un four de pressée dentaire (10), basé sur un dispositif pour le contrôle du processus de compression, lors dudit processus de compression un poinçon de presse (36) agit - le cas échéant par le biais du piston de compression (28) interposé - sur un lingotin (32) en particulier à partir d'une masse en céramique et exerce une pression, lorsque le lingotin (32) est introduit dans un canal de pressage (30) dans un moufle (24), où un capteur de pression, de déplacement et/ou de vitesse saisit au moins un paramètre de mouvement du poinçon de presse et où le dispositif de commande commande le processus de pressage basé sur un signal de sortie du capteur, **caractérisé en ce que** le critère de déclenchement pour démarrer le pressage est la modification d'au moins un paramètre de mouvement du poinçon de presse saisie par le capteur selon l'échauffement et/ou le ramollissement du lingotin.

Lo berücksichtigter Bereich
Pressstempel (beachte dieser
hat bereits Kontakt mit
Aloxkolben

Lo Alox Kolben

Lo Rohling

50mm

Lo EBM

Brennkammer
Mantel

FIG. 1

FIG. 2

Fig. 3

FIG. 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008012578 B4
- EP 1915972 B2
- WO 2014131588 A1
- EP 0438802 A1
- US 9022763 B2
- DE 102008015483 B4
- EP 1915972 B1